# EUROPEAN PATENT APPLICATION

(11) **EP 0 601 254 A1**
(43) Date of publication of application: **15.06.1994**
(21) Application number: 92480190.5
(22) Date of filing: 10.12.1992
(51) Int. Cl.: G06F 15/40, G06F 15/403

(54) **Method for allowing the access of a database by an application program**

(71) Applicant: International Business Machines Corporation, Armonk, N.Y. 10504 (US)
(72) Inventor: Ekpete, Robert, N-0391 Oslo (NO); Monteil, Gérard, F-06250 Mougins (NO); Nielsen, Carsten, DK-3460 Birkerod (DK)
(74) Representative: Schuffenecker, Thierry

(57) **Abstract**

Method for allowing the access of a database (60) by an application program (20) which communicates to the database through a Data_Access layer (40). The method comprises a first step of generating (102) upon request of the user a template comprising default values, said template consisting in an initial Network_Data_Structure containing a chain of individual objects descriptions being transmitted to said application program (20). Then, the updated values are inserted (105) into the Network_Data_Structure and sent to the Data_Access layer (40). The method further comprises the step of retrieving (107, 40) in a library (70) associated with said Data Access Layer (40) the object descriptions of all objects which are affected by the updated values inserted by the user, adding (107) to said Network_Data_Structure the object descriptions of said affected objects so that to generate a comprehensive Network_Data_structure containing all the values to be updated, and eventually, upon validation from said user, interpreting the Network_Data_Structure so that the access to the database, and the update of the values therein stored, are allowed although the application program does not know the structure of the database, being possibly of a Standart Query Language type.

## Description

### Technical Field of the invention

The invention relates to a method usable for a general software application or a telecommunication layer for accessing one data base.

In telecommunication networks, network data bases are increasingly involved in call processing for realization of new network services. Deploying service-specific data in central database has been the natural approach, but has been a limit to the introduction of new services.

A global approach of network database for network services requires that the data model be defined in a coherent, application independent scheme. Data modeling has been key for operation systems but was not really considered for network services. Application-specific interfaces and data imbedded within application code prevents new applications from sharing access to existing data. All applications should use the same data manipulation language to make their requests to the data base. This increases service portability and facilitates the deployment of new network services.

The first step of the evolution to share existing data is to use Relational data manipulation languages (such as Standard Query Language or SQL) for retrieval and updating of structured collections of data records, from a database. SQL provides the access to a database by means of a standardized set of functions and therefore provides an independence between the data stored into the database and the applications accessing it. Developments on the concept of relational databases and illustrations of the use of SQL language can be found in the book "Introduction to data base systems" by C. J. Date, 1981, Addison-Wesley Publishing Company, Library of Congress Cataloging in Publication Data, ISBN 0-201-14471-9 (see particularly page 91, 118 and 119). There is shown an example of a relational suppliers-and-parts database, i.e. a database that is perceived by the user as a collection of time-varying, normalized relations of assorted degrees, here a SUPPLIER and PART relations having some attributes (e.g. the attribute CITY in both the SUPPLIER and PART relations).

Relational Database and the SQL language has a major drawback which consists in the fact that the applications accessing that database has to know its structure, and particularly the different attributes of the relations. In the illustrative sample given in page 119 of the above document, there is shown one application which has for purpose to get all the supplier numbers for the suppliers located in one town (eg PARIS) with the status > 20. To achieve this, the application has to access the relational database by means of the following SQL request:
SELECT S=
FROM S
WHERE CITY = 'PARIS'
AND STATUS > 20.

Such a request requires that the application be aware of the fact that the CITY is one attribute of the relation SUPPLIER, ie the full structure of the relational database. This results in a strong dependance of the application programs on the database. Assuming that the structure of one database is modified, e.g. by adding one new attribute in one relation, or still if one relational database is replaced by an object oriented programming database, the applications which requires the access to that database will also have to be modified, thus considerably increasing the maintenance costs.

The problem to be solved by the present invention is to provide a method for accessing a database which does not require the knowledge of its structure and its data. In this way, the design and the maintenance of application programs is rendered independent on that of the accessed data base.

This problem is solved by the method for accessing a data base according to the present invention which is based on a data protocol between the application program and the database which has an object oriented structure. The method involves the creation of a data collection structure including objects which can be manipulated by specific functions stored in a data collections Library. When an application program wishes to access the database, it generates a data collection structure request which is received by a data layer which provides the mapping of the latter in accordance with the format and the structure of the database accessed. Conversely, the data layer receives the data from the database in its specific format (SQL, or object oriented programming format) and generates a corresponding data collection which is then transmitted to the application program.

### Description of the drawings.

Figure 1 illustrates an architecture in which the method of the inventio can be implemented
Figure 2 is a flow chart of the different steps of the method according to the present invention.

### Detailed description of the invention

According to the present invention, the information which is exchanged between the general application program and the database is based on object description elements which are hereinafter referred to as Data_Collections. Data_Collection allow an extremely flexible means for defining data structure in an object oriented manner, and provide a self-contained description of the datatype and value of any 'object' (for instance an attribute of one object ) and allow methods (functions) to be attached to the datatype of the object. A hierarchical object-type definition mechanism (HOT) permits objects to inherit characteristics and method from more general types of objects. For example a specific numerical field may inherit a basic validation method to check for non numeric characters, as well as having more specific validation of it's own. In order to simplify the access to object descriptions, the Data_Collections are organized into higher_level structures which will be referred to as Network_Data_Structures.

Data_Collections represent data which is transmitted between functions from different layers in the system while the general application program accesses the data_base. They are 'self-explanatory' that is to say contain any references to the data types. A Data_Collection instance is composed of three distinctive parts: a TYPE, a LABEL and its VALUE.

The TYPE defines the nature of a Data_Collection item, that is to say what kind of Data_Collection it is. There are some predefined types: INT, DOUBLE or STRING, which may be combined in order to form a composed Data_Collection element.

The LABEL of a Data_Collection is a text string which identifies a particular Data_Collection. Therefore, it is unique within the context where it is used.

The VALUE of a Data_Collection is an entity of the type which is defined by the Data_Collection's TYPE.

Each Data_Collection element is also associated with an internal changed flag which is used, i.e. set, reset or retrieved by special functions of the application program. Data_Collections are internally implemented as data objects, ie protected area within the memory of the machine, loaded with well known C structures. A Data_Collection as used by the application program is internally a pointer to a data collection structure; however, the internal representation is hidden from the user or the general application program. Those can access Data_Collections by means of special functions and macros which will be described later on in section "data collection functions".

Below are illustrated some examples of Data_Collection elements: primitive (or simple) Data_Collections and Composed Data_Collections.

Three primitives types of Data_Collections exist: INT, DOUBLE and STRING and are used in data_base access method of the invention. However, it should be noticed that the latter is not restricted to the used of only three types of primitives.

An example of a Data_Collection (DC) of the type INT is:
int number1 = 254;
where INT corresponds to the type of the DC, number1 is the label, and 254 is the value.

An example of a DC of the type DOUBLE is:
double pi=3.14159;
where 'pi' is the label and 3.14159 the value of the DC.

STRING Data_Collections are shown below:
string name1:/unp/file.dat;
string name2:'This is a text string';
A Composed Data_Collection is a DC which value is composed of a list of other simpler Data_Collections. The latter will be referred to as the components of the composed DC. This definition being recursive, it becomes possible to build data collections of an arbitrary degree of complexity. Externally, the list appears as a sequence of data collections which are enclosed by a pair of parenthesis: (). The delimiter between the different components of the Composed Data_Collection is the character ";". The latter is required after all components. An example of such a Composed Data_Collection appears below:
composed c1=(int i1=1; int j2=2;);
From what is preceding, it appears that the composed DC is of the type COMPOSED, has a label which is c1, and a value which consists of two components being the two following primitive Data_Collections:
int i1=1 and int j2=2.

There are different types of composed Data_Collection. A PNT Data_Collection is defined as follows:
pnt p1=(double x=10.3; double y=54.9;);
The latter composed DC has two components, both of the types DOUBLE.

OPEN type Data_Collection are composed of any type of other DC. For instance, A data_Collection of a type LINE may consist of two Data_Collections of type PNT such as follows: 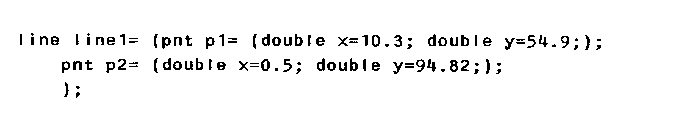
A new OPEN type Data_Collection is defined implicitly the first time the type is used. For instance:
int Istat;
DC point1= NULL;
Istat= DCnew(&point1, "pnt po1=(double x=1.0; double y=25.5;);");
If this were the first time pnt was used, the new OPEN type PNT has now been defined implicitly. At the same time, a new data collection instance has been created. point1 will point to that data collection:
pnt po1= (double x=1.0; double y=25.5;);
When a DCtype is unknown, it is created as an OPEN type composed the first time DCnew is used.

The implementation of data collection are invisible to the user (the application programmer), but it may be of a certain value to have a basic knowledge of the implementation principles that have been applied.

Each data collection is in memory represented as a "C" structure. Each data collection type is also represented as a "C" structure. Each instance of a data collection of a certain type has a pointer to the "C" structure representing this type. The "Object Oriented implementation" permit to locally define functions on data collections for each type:
For example, there is a special print function for the type "int", one for the type "composed", etc...

When the user calls the functions DCprint, the system call the rigth function depending on the data collection type.

### Data Collection functions

Data collections are used by the application programmer to represent data which is transferred between different layers of the system and the database.

The application programmer may not access data collection directly. Data collection may only be accessed thru predefined data collections functions and macros. Some example are defined below. For each function is described the parameters of the function. Output parameters are always written before input parameters.

A call to a DCinit function is used for initializing the data collection system before using any of the data collection functions. system must be initialized.

As a general rule, a variable Istat is defined and will be used to check the completion status of the data collection function execution. 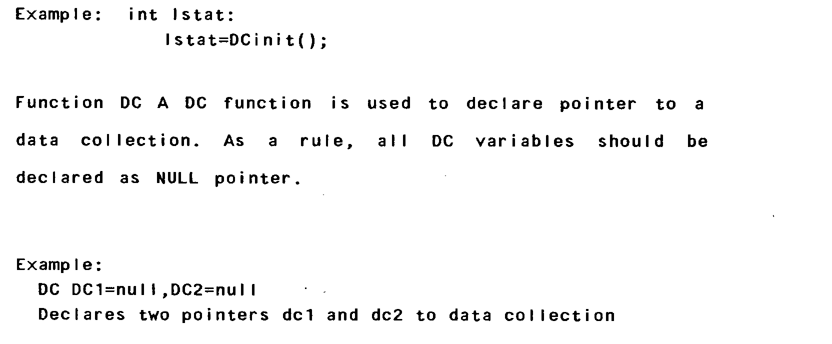
A DCnew(parameters) allows the creation of a new data collection, with the following parameters:
- O:: Address of the new data collection to be created
- I:: A string which is interpreted but the DCnew function String consists of the three elements type, label, value
Type is mandatory
Label is optional, if skipped it will be set to NULL
Value is optional, if skipped default value is assumed
- RETURN:: Status
Example of new data collection of type Integer:
int Istat;
DC number1=NULL,number2=NULL,number3=NULL,number4=NULL;
Istat=DCnew(&number1,"int n1=538");
Istat=DCnew(&number2,"int n2");
Istat=DCnew(&number3,"int");
Istat=DCnew(&number4,"int=98");
number1 points to data collection int n1=358
number2 points to data collection int n2=0
number3 points to data collection int =0
number4 points to data collection int =98
A DCassign(parameters) function is used to assign a value to a primitive data collection with the following parameters:
O: pointer to a data collection
I: The value the data collection should obtain
Return: Status 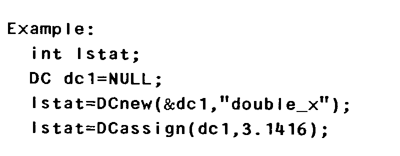
dc1 now points to the data collections double_x=3.14
A DCtextAssign function works in a similar way than DCAssign function. The difference lies in the fact that a string value is used in input instead of a value corresponding to the type of data collection.

A DCgetA function is an addressing function which is used to retrieve a component with a given label from a composed data collection.
O: Address od the retrieved data collection
I: A pointer to a composed data collection
I: A label, that is a text string
Return: Status 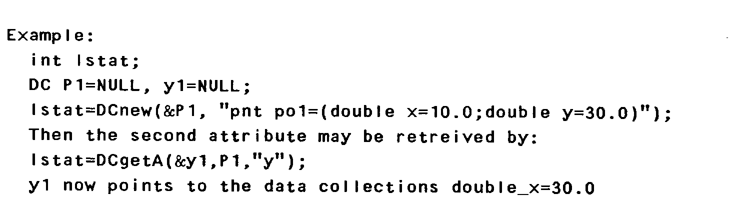
In the following example, the skilled man in the programming area will be shown an example of the manipulation of the Data Collection functions

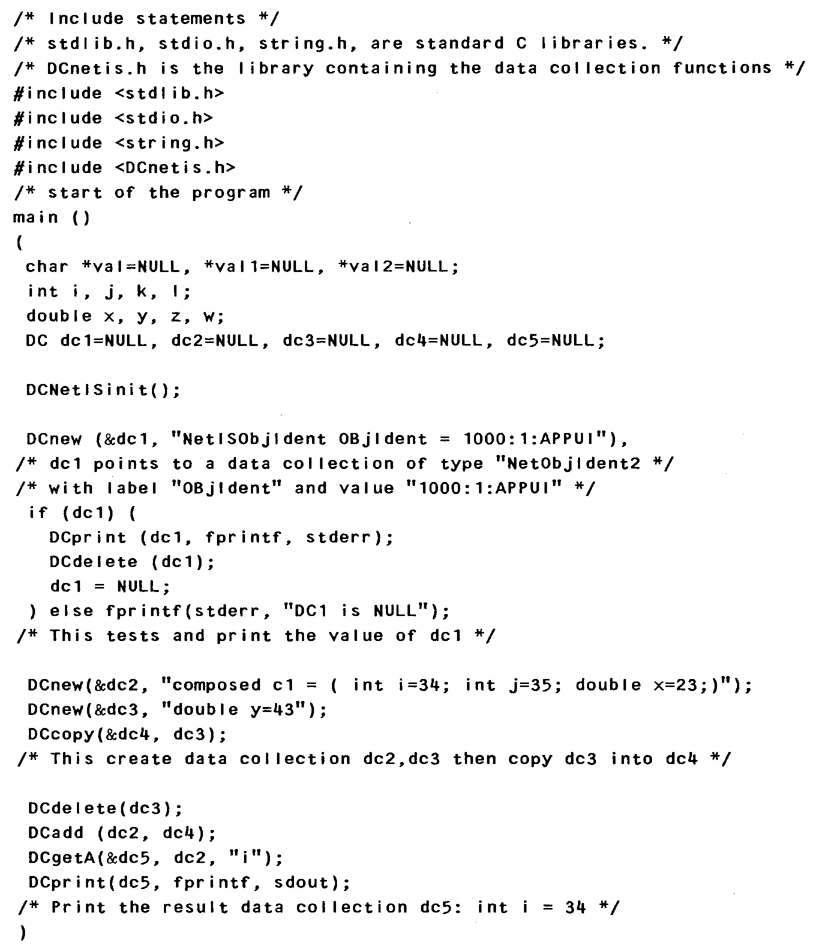

### Use of higher levels of data collection

During the exchange of information between the general application program, the Data_Collections as defined are basic elements which allow the organization of higher-level structures hereinafter referred to as network objects or Network_Data_Structures (NDS). As will be seen hereinafter, theses higher level of data collection will provide an common and useful data interface for passing objects descriptions between all program layers during the access of the data base.

In the preferred embodiment of the invention a network object description is a composed data collection with the following generic data structure:

### Object identification

Object attributes, there is one set of basic data collection per attribute.
Object position, there is one set of basic data collection per position.
Object relation, there is one set of basic data collection per relation.

The attributes are the descriptive attributes or data fields of the object, for instance the diameter of a telecommunication pair. The position corresponds to the geographical position of the object, for instance that of a telecommunication box. The relation classes define the different classes of relation the object can have with other objects. Such relations can be for instance 'connection to' or 'positioned by' defining the relationship between two different objects, ie that a first object (a telecommunication cable) is connected to a second object (e.g. a telecommunication box), or still that a third object (e.g. a telecommunication pair) is positioned by a fourth object (e.g. a telecommunication cable).

Each object in the network has a different structure, such as the number and types of attributes, number and type of object relations.

Then each network object structure will be represented by a "template" which is a composed data collection representation of a specific network object. In addition, the template can contains default values for some of the attributes.

Each data collection entry in the template has an identification which is the label of that specific data collection and will be used by the application to retrieve information about network objects. One of the key advantage of the template concept associated with the data collection functions is that changes in the template definition does not impact the application if changes are addition of new fields. The application is required to know only the logical content of the template, not the physical structure.

Hereinafter is shown an example of a template which is used. The example is a "TAR Souterrain". A TAR is a trenches in the ground where cable or duct are lay down. A TAR is always positioned at both ends, by physical entities called "APPUI". Each APPUI is a network object and the relation between TAR object amnd APPUI object will be of the type "CONNECTED TO" and "CONNECTED FROM". 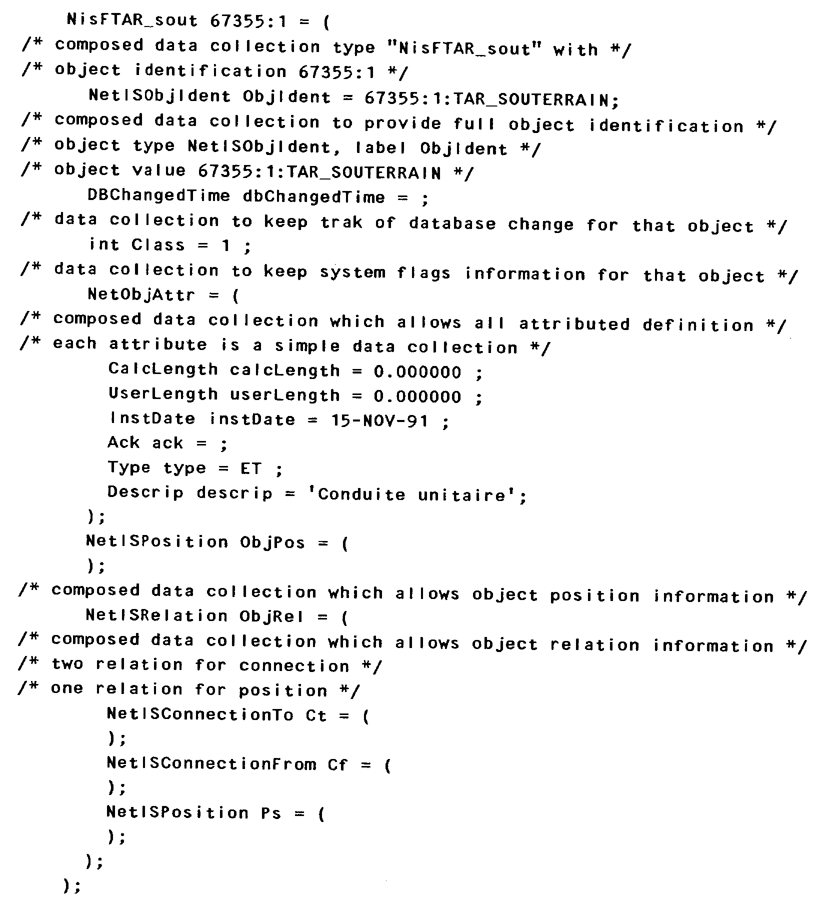
It appears that the application needs to communicate the network database sometimes with a large number of network objects. In this view, a higher level of data collection called "Network Data Structure NDS", hqs been defined. In the preferred embodiment of the invention, a NDS will be a composed data collection which in fact is a grouping of lower data collection structure "network objects", and each network object is the grouping of the smaller structure called data collection. Then a NDS is by itself a large composed data collection, which can contains several hundred of network objects and be several megabytes in terms of size.

A Network_Data_Structure may contain networks of objects descriptions, which will appear conceptually as chains of individual objects descriptions linked together as will be shown hereinafter. The Network_Data_Structure also contains a number of control-flags which are used to indicate the changes made by the user or the general application program since the object description was retrieved from the data base. More particularly, if the object is a new one (that is has not yet been stored within the database), it is market as 'Created'. If the object description is changed in anyway, then the object is marked as 'changed'. If the object is to be deleted, then it is marked as 'deleted'. If a position only, or a relation is to be deleted, then the object is marked as 'deleted' in the structure only. At last, if a position or relation is changed, then the old version is marked for deletion and the new position/relation is inserted. As will be described with details hereinafter, the latter control-flags provides a recipe for the changes which are successively made to the database either by the application program or the user.

In order to carry out a research on the considered database, the method according to the present invention performs the following steps.

For the purpose of the clarity of the explaination, it will be assumed that an application running in the system wished to retrieve all objects "TAR_SOUTERRAIN" of the type "CONDUITE UNITAIRE CU".

First the application requests the template of the object type "TAR_SOUTERRAIN". The request is sent from a generic point of view to the template manager which is a distributed function of the system.

After receiving the template, the application has to fill in the template the data collection fields indicating the search criteria. In this case, the attribute data collection for the type of TAR_SOUTERRAIN has to be set to "CU". The application uses the data collection function to do that job: 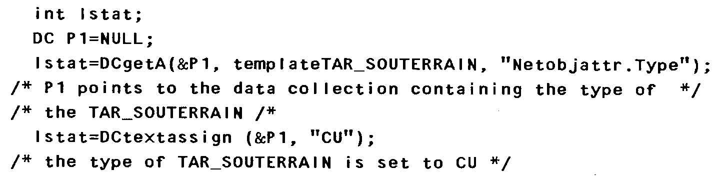
The application sends now a SEARCH request to the data access layer and provide the updated template as parameter.

The data access layer receiving the search request, identify from the template the modified data collection entries has search parameters. Then the data access layer build the search command (SQL in case of relational database) to the database manager.

The data access layer, after retrieval of all network objects with the requested search criteria provide them to the application with a composed data collection containing all the network object identification. Another search option can be to return to the application all the network objects, in this case, it will be an NDS format.

It will be described now how a NDS data collection structure evolves during exchange between application and database.

An application wants to create a new object "TAR_SOUTERRAIN" of the type "CONDUITE UNITAIRE CU".

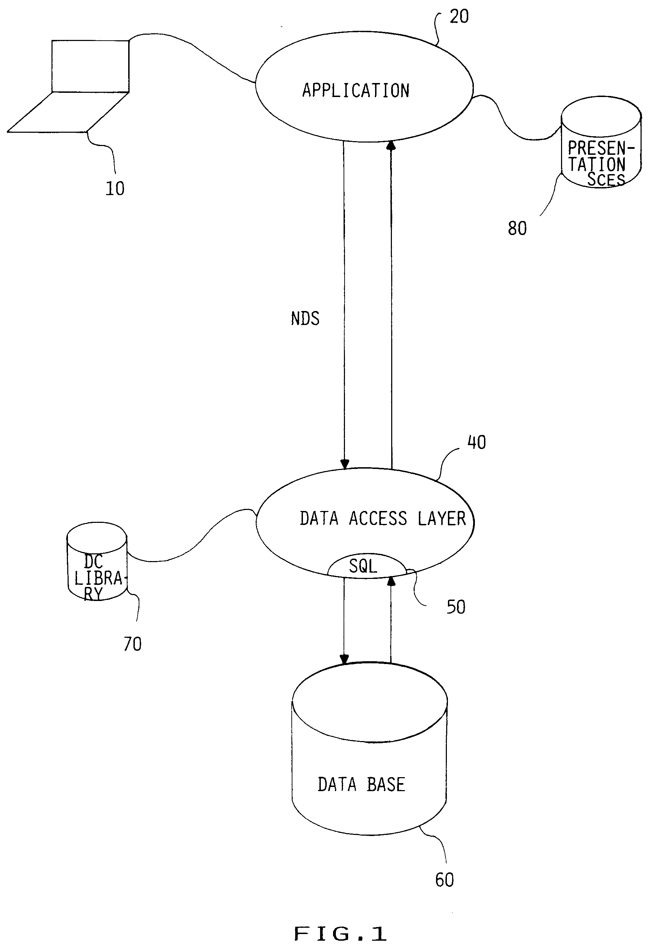

Figure 1 illustrates a preferred embodiment of the invention where a data base 60 can be accessed by one user communicating with one general application program 20 via a terminal 10. Data Base 60 can be either an object oriented data base or a more traditional relational data base, in which case a SQL data base service 50 will be made necessary for generating the traditional SQL requests required for accessing data-base 60. If the data base 60 has the type of an oriented data base, Data base service layer 50 will be made for generating object oriented search requests. According to the present invention the application program 20 accesses data base 60 by means of a Data_Access layer (DA) providing an exchange of Network_Data_Structure (NDS) between data base 60 and the application program 20.

The continuous update of the different objects stored within database 60 is performed by a specific application program which is herein referred to Data_Input-and_Maintenance (DI&M) application. The access of the data base is achieved by means of bilateral transfers of a Network_Data_structure (NDS) between DI application and Data_Access (DA) layer 50 as described in the following.

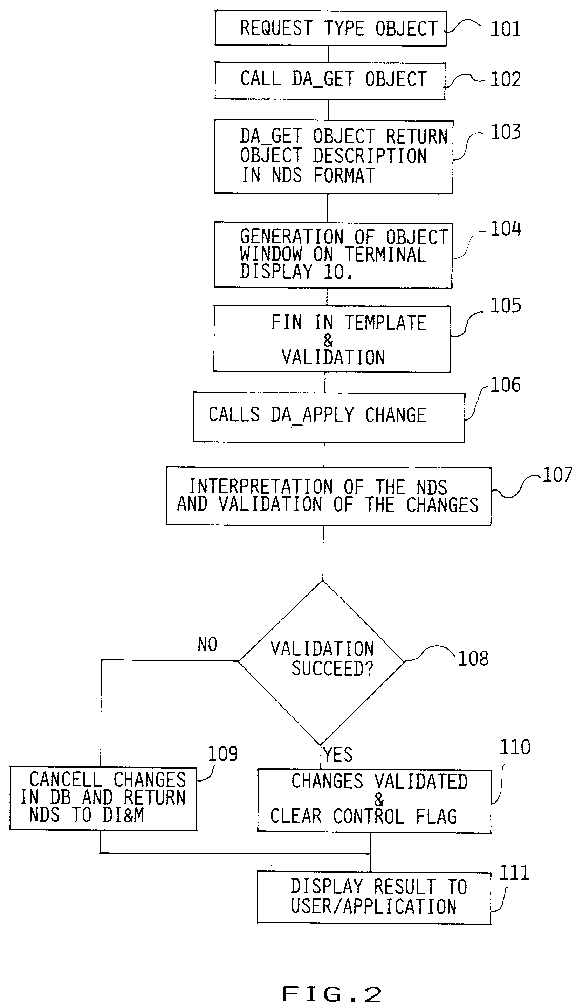

Assuming that the user or the general application program wishes to create a new object, or change the description of an existing one. An object window is displayed with the appropriate layout. For this purpose, DI routine performs a first step of requesting the retrieval from DC library 70 of a descriptive template for the object in an appropriate NDS format. This is achieved by means of the following steps and procedures which are described in reference with figure 2. A first step 101 is performed during which the DI application asks the user to indicate the type of the object which the latter wishes to create from a given list of object-types. Then, step 102, DI application calls a routine DA_GetObject function in Data Access layer 50, giving the selected object-type as a parameter. DA layer 50 has copies of the descriptive templates for each type of object which are stored in the above Network_Data_Structure format. If a new object is to be created, a copy of a descriptive template corresponding to the desired type of object is then extracted from the DC Library 70, stored into the memory. This object description will include necessary default values for attribute fields. If an existing object is to be retrieved and then updated, then DA_GetObject selects the template for the specified type of object, and reads the template to determine which data to retrieve from the database, the data describing the object may be stored in several different database tables (an attribute table, a position table, one or more relation tables, and so on), and DA_GetObject determines which tables to access using a set of cached dictionary tables.

Then, step 103, DA_GetObject function returns the requested object description in a NDS format.

The concept of the system is distributed. It means that the DA layer can be in another system. It happens that previously retrieved network information is already kept by the application in "workspace memory" generally referred as "network in memory",
Then, step 104, DI application generates on the display of terminal 10 an alphanumeric data maintenance window (an object window) based on the contents of the NDS which was precedent received from DS_GetObject function. To achieve the display of this object window, DI application accesses Presentation services 80 which provides the appropriate presentation and location of the different individual fields which compose the object window to be displayed on terminal 10. For instance, presentation services 80 may provide the 'X' and 'Y' coordinates of the position of the different individual fields.

Step 105, the user is allowed to fill the different attribute fields of the object window. In a preferred embodiment of the invention, this process is accompanied by a serie of help pop-up menus attached to the of datatype of each field to be filled. This serie of help-menu is also provided by Presentation services 80.

The system is multi-application at the workstation level. The user has two ways to enter data (position and relation) in the object window.
- By alphanumeric direct data entry
- By graphical entry. It means pointing (mouse) to the object in another window, then the associated information is automatically provided in the object window. Once the different individual fields of the descriptive template for the object have been filled by the user, or still a general application, (new attribute values, position(s) and relations) to the descriptive template for the object, the following steps are performed.

Then, the user is requested to confirm the set of updates which were introduced. To perform this, the user can press an 'OK' or 'apply' function in the object window. The latter confirm from the user is used for initiating a set of validation method which are associated with the relation classes and the datatype of the attributes. It appears that since the validation methods are an element of the object which was received by DI application from from DA_GetObject function in step 103, the latter application does not need to know per se those functions. This enhance the independance existing between the application program and the database. In the case where the validation methods fail, the appropriate error messages are immediately displayed to the user.

Then, step 106, DI application calls a DA_ApplyChanges function from Direct Access Layer 40, giving the network (NDS) containing the object description as a parameter.

In step 107 DA_ApplyChanges function first interpret the set of control flags which are included into the Network_Data_Structure (NDS) and which indicates the changes which were brought by the user or the application program communication with the DI application. DA_ApplyChanges formulates the set of updates to be made in the database; while doing this, it builds up a list of all the related objects which are affected by the changes. The modified objects and the related objects are then locked (to prevent other users/applications updating them), and the changes are brought to the database, but not yet commited. To confirm the last changes, a full validation is performed, step 108, on the modified object and all the affected related objects as will be illustrated hereinafter.

If the latter validation fails, then DA_ApplyChanges rollsback the database changes, and returns the unchanged NDS network together with an appropriate error message, step 109. In the contrary case, the validation succeeds, the changes brought to the database are commited and the NDS network is updated to clear all the NDS control-flags, step 110 and DA_ApplyChanges returns SUCCESS.

Then, step 111, the DI displays to the user of the result of his attempt to 'apply' the changes or, in the case where DI communicate with a higher level application, a corresponding message is returned to the latter. In the case where the attempt have failed, the user may make corrections and re-attempt the 'apply' function. The NDS control-flags are still set to indicate all the original changes as well as the additional ones, so that when DA_ApplyChanges is called again, it will start the apply actions afresh.

It therefore appears for the the description above that a substantial independance is provided between the DI application program and the database by means of the transmission of NDS networks between the application program and DA_layer 40. The different object descriptions (descriptive templates) are manipulated in memory as structures in the NDS format. There is described below an illustrative example of the successive communication of the NDS structures resulting from the creation of a new object, being an underground trench.

As mentioned below with respect to step 102, when DI wishes to create for instance a new object, for instance an underground trench, it calls DA_Layer 40 which returns, in step 103 the following Network_Data_Structure or template. It appears that some default values were preassigned to some arguments of the object (the installation date of November 15th, 1991 or still the lenght of the trench being equal to 0 meter...).

Below is described the evolution of the considered data collection being of the type composed as mentioned above. 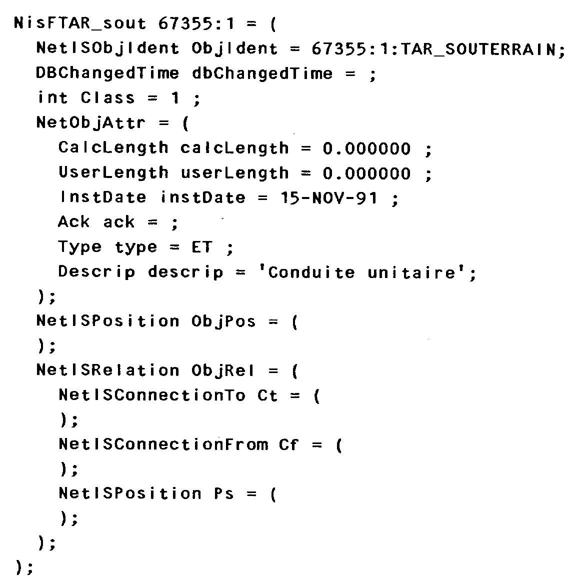
Then, according to step 105, the user types the values to be stored within the data base. These values are inserted within the above Network_Data_Structure by means of Data_Input & Maintenance (DI&M). For instance, it is assumed that the user has input some values to the following attributes:
- calculated Length: : 20.00000
- User Length: : 20.00000
- Installation Date: : 10-APR-92
- Type: : CU
- Description: : Conduite unitaire
- Object relation: : appui 35:1
- Object relation: : appui 52:1
It appears that in this case, the user has indicated that two additional objects "APPUI" (respectively referred to as 35:1 and 52:1) are associated to the object "TAR". A more complex Network Data Structure is therefore returned to DA_Layer as follows:
An NDS is always defined as composed data collection type NesISNET, followed by another composed data collection type NetISNetCore and label NetCore. 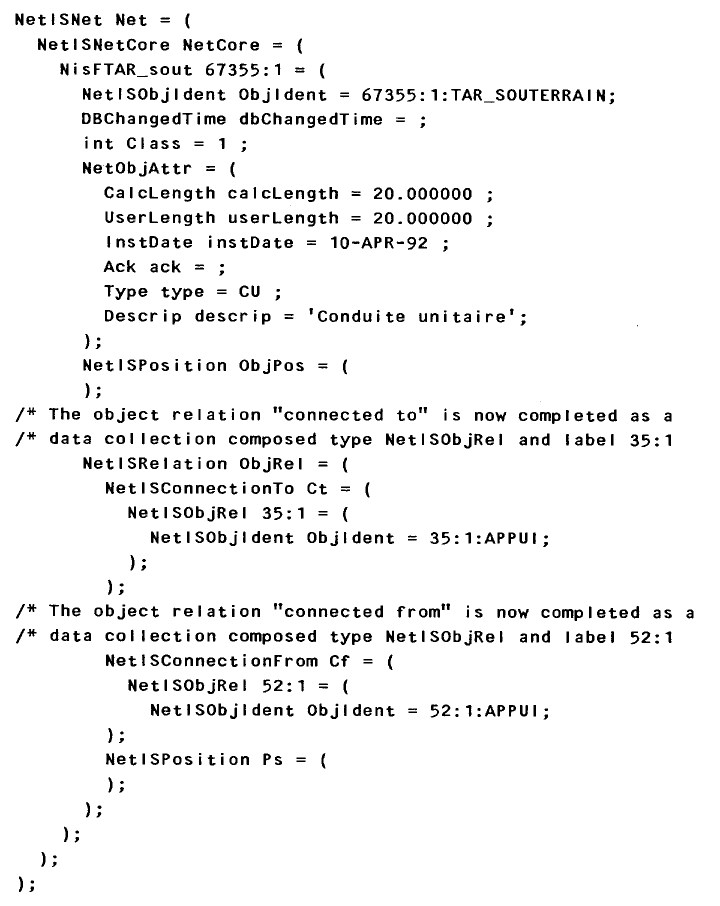
Then the DA_Layer assigns a ChangeTime to the latter object, and stores it in the data base. (the database updates are however not yet commited at this point). The object description now appears as follows (with the new ChangeTime added): 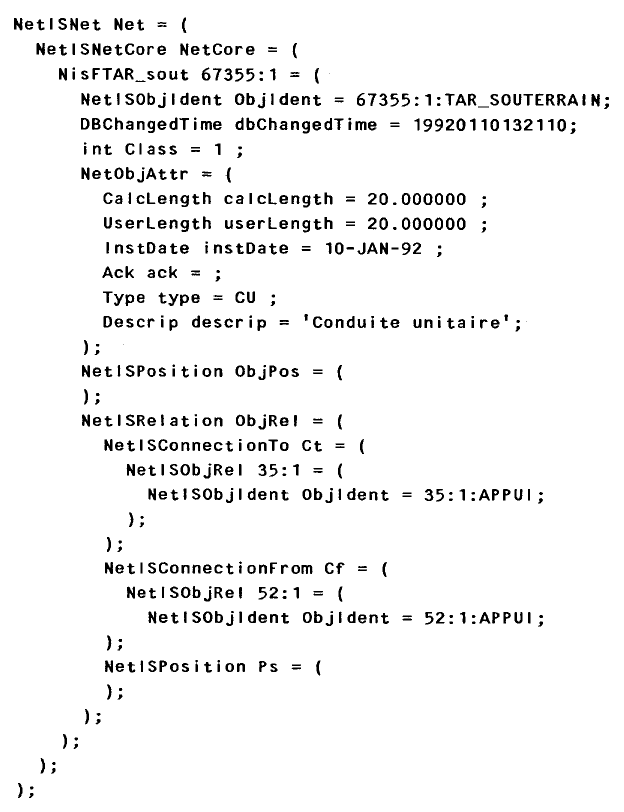
The DA_layer now retrieves all related objects which are affected by the creation (or changes to ) this object. The object description now appears as follows, with the related objects also retrieved into the structure: 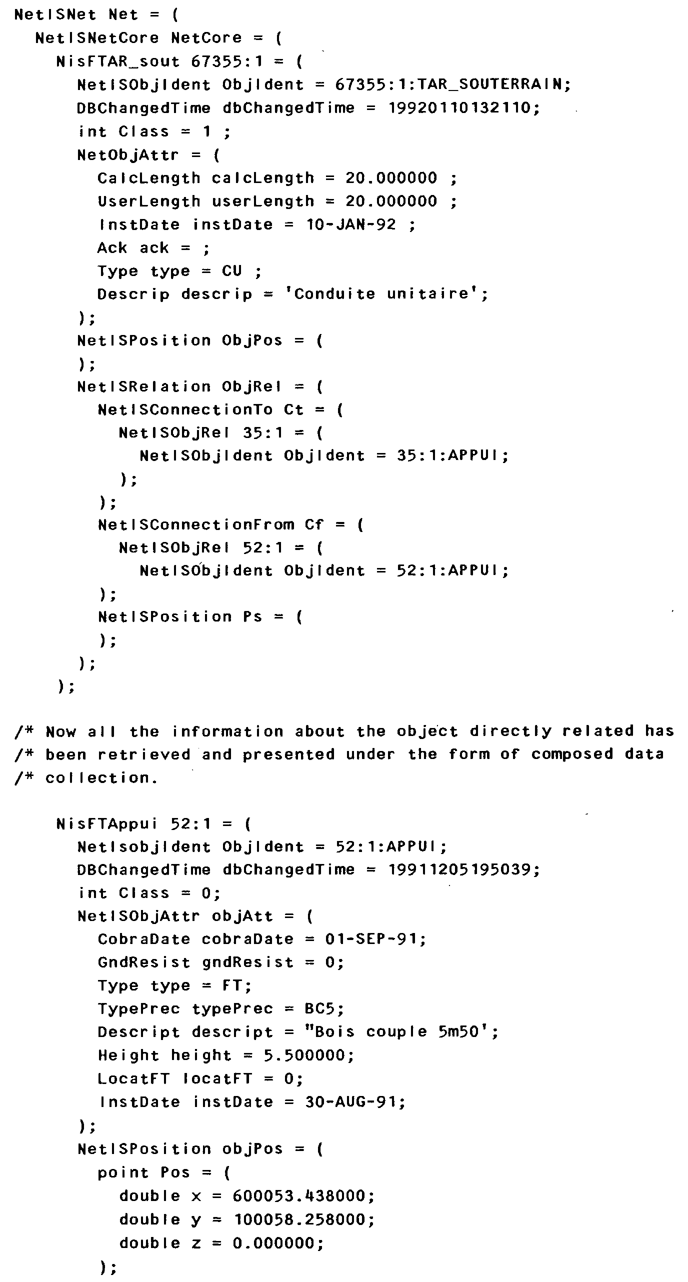 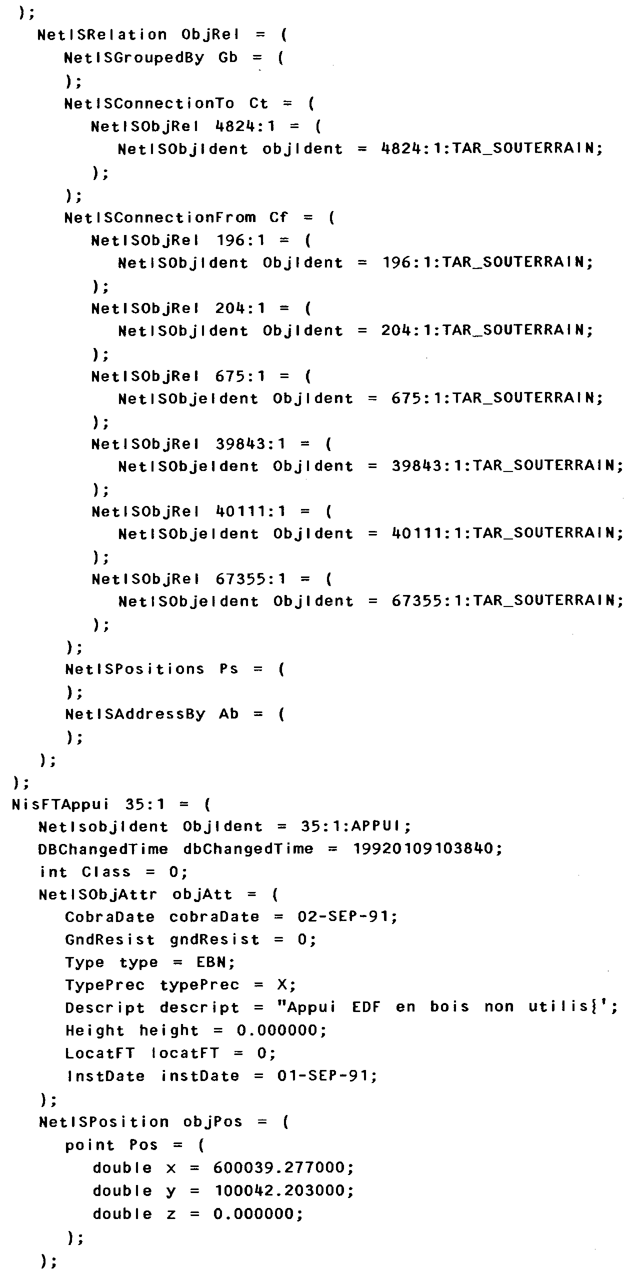 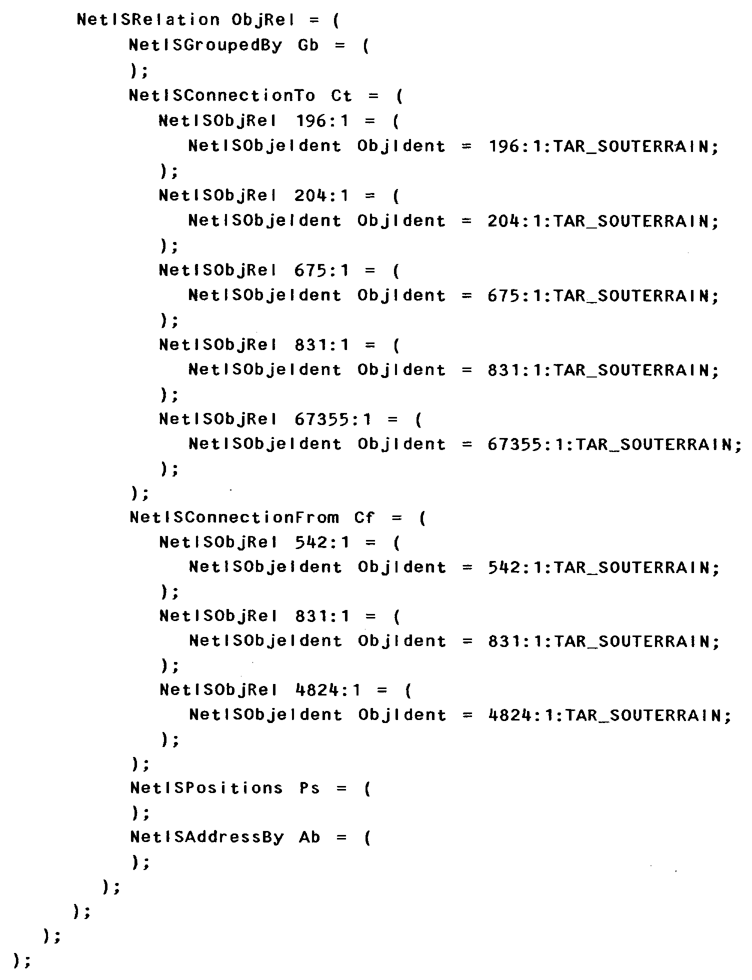
It should be noted that the connected objects 35:1 (Appui) and 52:1 have now been added to the Network_Data_Structure.

The DA Layer then updates the ChangeTimes for the related objects, updates the geographical grid-mappings for the objects (where relevant) and validates all the changes made to all these objects. If the validation succeeds, according to step 108, then the changes are commited to the database. The object description now appears as follows, with the related objects also retrieved into the structure: 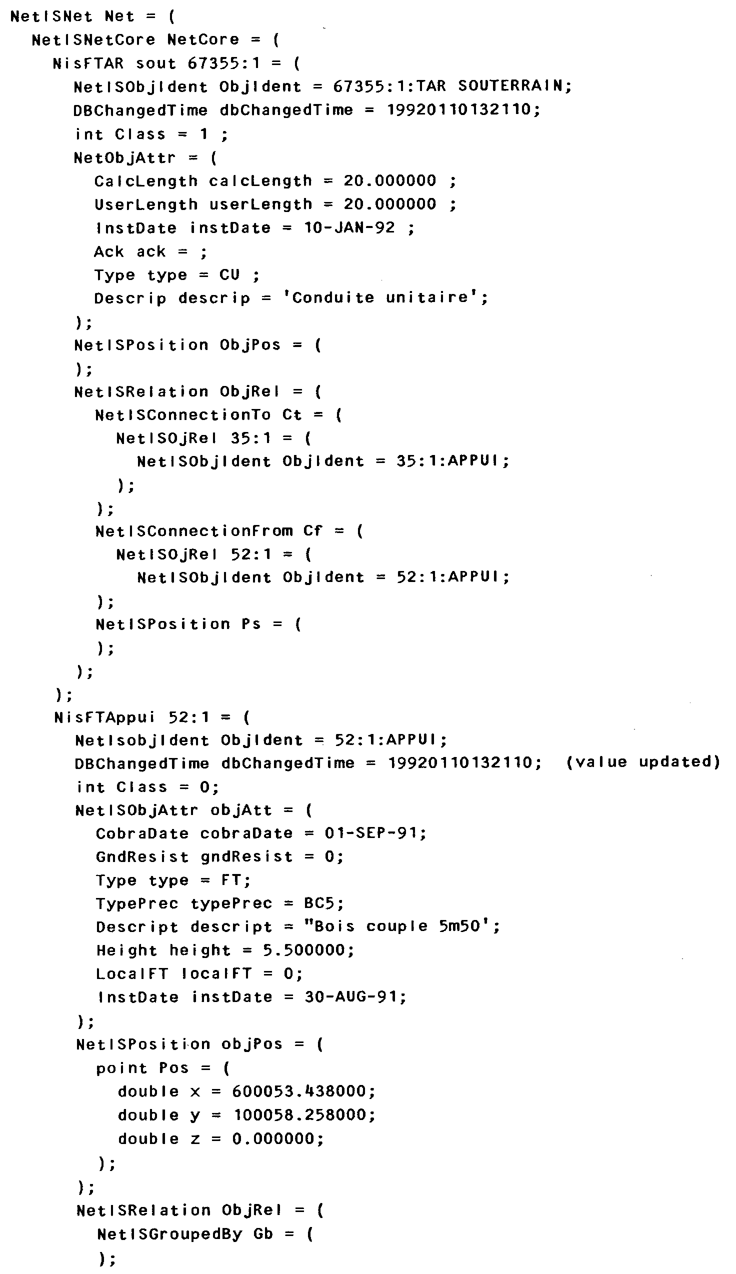 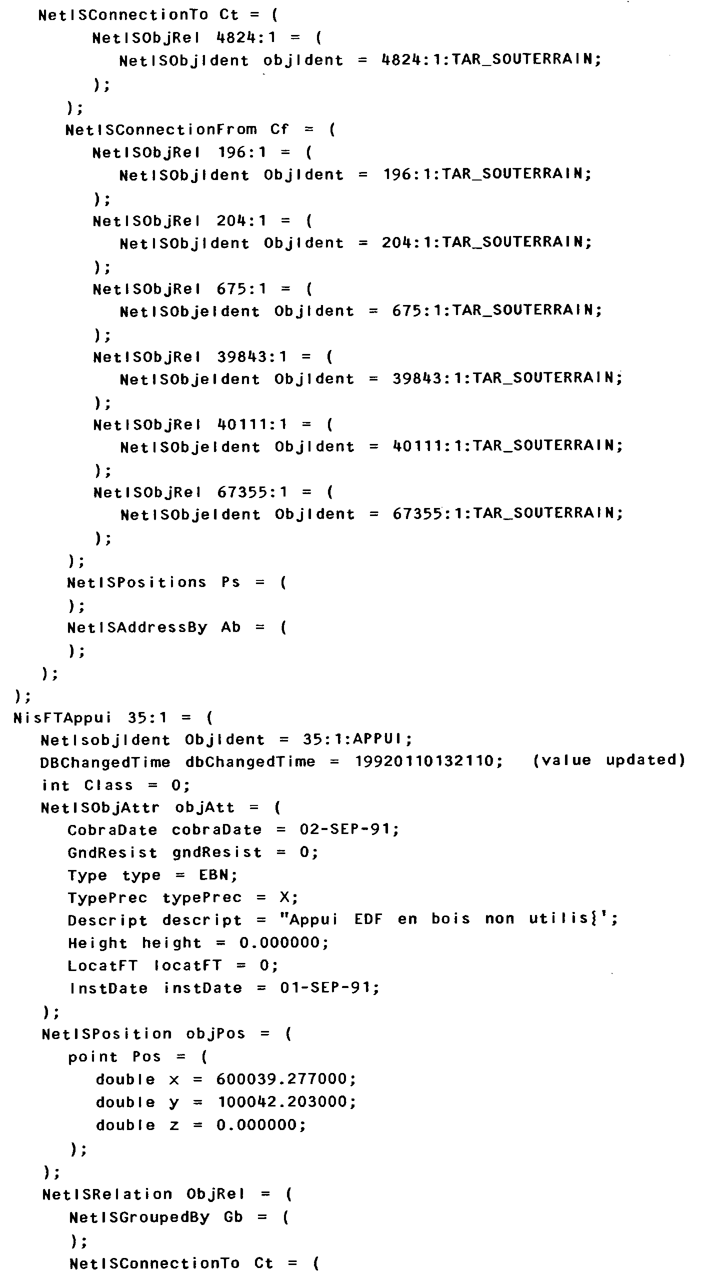 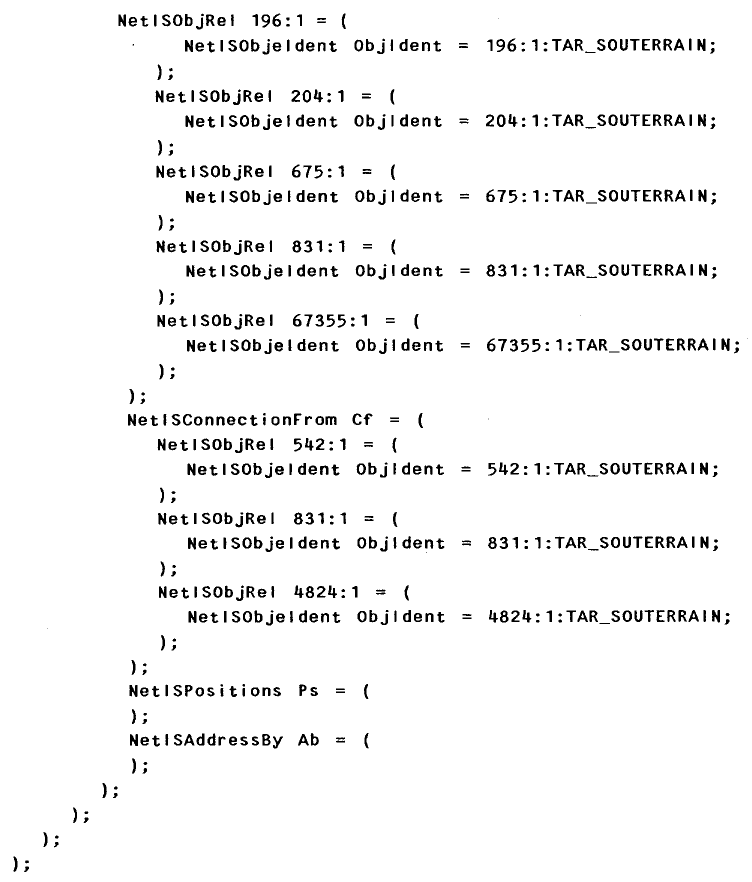
The database contents is therefore updated by means of the following Network_Data_Structure which is interpreted. Each object in the NDS has a set of flags. The DA layer looks for each object in the NDS to identy the object with the changed flag ON. Then if the changed flag is ON, the DA layer takes all neccesary actions to update the database.

If the database complies with the SQL one, an additional step is required for generating the appropriate set of SQL commands so that the database can be updated. This is performed by SQL services layer 50 in figure 1.

## Claims

1. Method for allowing the access of a database (60) by an application program (20) communicating to said database through a Data_Access layer (40) characterized in that it includes the step of:
- generating (102) upon request of the user a template comprising default values, said template consisting in an initial Network_Data_Structure containing a chain of individual objects descriptions being transmitted to said application program (20),
- inserting (105) the updated values into said Network_Data_Structure and sending it to said Data_Access layer (40),
- retrieving (107, 40) in a library (70) associated with said Data Access Layer (40) the object descriptions of all objects which are affected by the updated values inserted by the user,
- adding (107) to said Network_Data_Structure the object descriptions of said affected objects so that to generate a comprehensive Network_Data_structure containing all the values to be updated,
- upon validation from said user, interpreting said Network_Data_Structure so that to access said database and update all the affected values therein stored.

2. Method according to claim 1 characterized in that each elementary object description is composed of three distinctive parts characterized by a TYPE defining the nature of the elementary instance, a LABEL being a text string identifying said instance, and a VALUE being an entity of the type as defined by the TYPE of the instance considered.

3. Method according to claim 1 or 2 characterized in that said Data Access Layer (40) is designed to access a Standart Query Language (SQL) database so that the application program becomes independent on the structure of said SQL database.

4. Method according to claim 1 or 2 for permitting the access to a database for storing the features of the telecommunication equipments existing in a determined geographic area.
